# EUROPEAN PATENT APPLICATION

(11) **EP 4 730 707 A1**
(43) Date of publication of application: **22.04.2026**
(21) Application number: 25203660.3
(22) Date of filing: 22.09.2025
(51) Int. Cl.: H04L 9/40, H04W 12/06, H04W 12/63, G01S 5/02

(54) **METHOD AND APPARATUS FOR AUTHENTICATION OF A USER BASED ON LOCATION OF THE USER**

(30) Priority: 21.10.2024 US 202418921042
(71) Applicant: INTEL Corporation, Santa Clara, CA 95054 (US)
(72) Inventor: BLUM SHEM-TOV, Ilil, 451523 Kiryat Tivon (IL); KLEIN, Yaron, 4862212 Rosh Haayin (IL); HOROVITZ, Dan, 7578229 Rishon Lezion (IL); KAHANA, Yoni, 0910000 Kfar Hess (IL); BEN-SHALOM, Omer, 75503 Rishon Lezion (IL)
(74) Representative: 2SPL Patentanwälte PartG mbB

(57) **Abstract**

A method and apparatus for authentication of a user. A user profile is generated during an initial registration. The user profile may include a trusted location of the user. During a subsequent authentication process for the user, it is determined whether the user is located in the trusted location of the user, and an access to a service for the user may be controlled based on a result of the authentication process and the determination whether the user is located in the trusted location of the user. A location-based parameter of the trusted location of the user may be determined and stored in advance, and it is determined whether the user is located in the trusted location of the user by comparing the location-based parameter of the current location of the user and the location-based parameter of the trusted location of the user.

## Description

### Background

Conventional authentication methods are often susceptible to various security breaches, including Man-in-the-Middle (MiTM) attacks. These attacks can compromise user data and weaken the overall security of digital profiles. Conventional solutions for authentication include username-password combinations, biometric authentication, two-factor authentication or multi-factor authentication (MFA), behavioral biometrics, password-less authentication, security questions, hardware tokens, or the like.

Two-factor or multi-factor authentication requires a user to provide two or multiple different authentication factors to verify themselves. While Two-factor authentication improves security, it can still be vulnerable to phishing attacks and can be inconvenient for the user, requiring them to remember a password and have access to a secondary device or email. Biometric authentication uses unique biological traits of the user, such as a fingerprint or facial recognition. However, biometric data can be stolen or replicated, and once compromised, it cannot be changed like a password. It also requires biometric hardware on the edge device (which increases cost) and user intervention (to provide biometric sample), both raise the bar of using it. Behavioral biometrics method analyzes patterns in user behavior for authentication, such as keystroke dynamics or mouse movements. While innovative, it can be affected by changes in user behavior due to mood, illness, or even device changes. Password-less authentication sends a temporary code to the user's email or phone number, eliminating the need for passwords. However, it is reliant on the user's access to their email or phone, and if these are compromised, so is their account. Security questions are an older method where users answer pre-set questions to verify their identity. However, the answers are often easy to guess or find online, and it provides an inferior level of security. Hardware tokens method use physical devices that generate a code to be used for log in. While secure, they can be lost or stolen and are inconvenient to carry around.

### Brief description of the Figures

Some examples of apparatuses and/or methods will be described in the following by way of example only, and with reference to the accompanying figures, in which
FIG. 1 shows an example system including a user device and a server;
FIG. 2 is a diagram of an example apparatus configured to perform authentication of a user;
FIG. 3 is a flow diagram of an example process on a server side for authentication of a user;
FIG. 4 is a flow diagram of an example process on a user side for authentication of a user;
FIG. 5 illustrates an example case of Fast Identity Online (FIDO) authentication with trusted location verification;
FIG. 6 is a signaling diagram of an example process for authentication of a user;
FIG. 7 is a block diagram of an electronic apparatus incorporating at least one electronic assembly and/or method described herein;
FIG. 8 illustrates a computing device in accordance with one implementation of the invention; and
FIG. 9 is included to show an example of a higher-level device application for the disclosed embodiments.

### Detailed Description

Various examples will now be described more fully with reference to the accompanying drawings in which some examples are illustrated. In the figures, the thicknesses of lines, layers and/or regions may be exaggerated for clarity.

Accordingly, while further examples are capable of various modifications and alternative forms, some particular examples thereof are shown in the figures and will subsequently be described in detail. However, this detailed description does not limit further examples to the particular forms described. Further examples may cover all modifications, equivalents, and alternatives falling within the scope of the disclosure. Like numbers refer to like or similar elements throughout the description of the figures, which may be implemented identically or in modified form when compared to one another while providing for the same or a similar functionality.

It will be understood that when an element is referred to as being "connected" or "coupled" to another element, the elements may be directly connected or coupled or via one or more intervening elements. If two elements A and B are combined using an "or", this is to be understood to disclose all possible combinations, i.e. only A, only B as well as A and B. An alternative wording for the same combinations is "at least one of A and B". The same applies for combinations of more than 2 elements.

The terminology used herein for the purpose of describing particular examples is not intended to be limiting for further examples. Whenever a singular form such as "a," "an" and "the" is used and using only a single element is neither explicitly or implicitly defined as being mandatory, further examples may also use plural elements to implement the same functionality. Likewise, when a functionality is subsequently described as being implemented using multiple elements, further examples may implement the same functionality using a single element or processing entity. It will be further understood that the terms "comprises," "comprising," "includes" and/or "including," when used, specify the presence of the stated features, integers, steps, operations, processes, acts, elements and/or components, but do not preclude the presence or addition of one or more other features, integers, steps, operations, processes, acts, elements, components and/or any group thereof.

Unless otherwise defined, all terms (including technical and scientific terms) are used herein in their ordinary meaning of the art to which the examples belong.

In the following description, specific details are set forth, but examples of the technologies described herein may be practiced without these specific details. Well-known circuits, structures, and techniques have not been shown in detail to avoid obscuring an understanding of this description. "An example," "various examples," "some examples," and the like may include features, structures, or characteristics, but not every example necessarily includes the particular features, structures, or characteristics.

Some examples may have some, all, or none of the features described for other examples. "First," "second," "third," and the like describe a common element and indicate different instances of like elements being referred to. Such adjectives do not imply element item so described must be in a given sequence, either temporally or spatially, in ranking, or any other manner. "Connected" may indicate elements are in direct physical or electrical contact with each other and "coupled" may indicate elements co-operate or interact with each other, but they may or may not be in direct physical or electrical contact.

As used herein, the terms "operating", "executing", or "running" as they pertain to software or firmware in relation to a system, device, platform, or resource are used interchangeably and can refer to software or firmware stored in one or more computer-readable storage media accessible by the system, device, platform or resource, even though the instructions contained in the software or firmware are not actively being executed by the system, device, platform, or resource.

The description may use the phrases "in an example," "in examples," "in some examples," and/or "in various examples," each of which may refer to one or more of the same or different examples. Furthermore, the terms "comprising," "including," "having," and the like, as used with respect to examples of the present disclosure, are synonymous.

The example schemes disclosed herein address the complex issues of improving the security of authentication methodologies in the digital world. The example schemes disclosed herein provide methods for hardening the authentication methodologies by introducing a location-aware authentication control. For example, this enhanced security feature uses the unique physical parameters of a user's trusted location as an additional factor in the authentication process. This approach is not only expected to bolster security but also ensures better control over personal data.

Additionally, the example schemes disclosed herein aim to align the authentication process with security standards such as Fast Identity Online (FIDO) or any other security standards, further enhancing its resilience against MiTM attacks and other potential security threats. This alignment helps create a more secure, user-friendly authentication process, thereby addressing and solving the critical need for more robust and secure authentication systems in today's digital world.

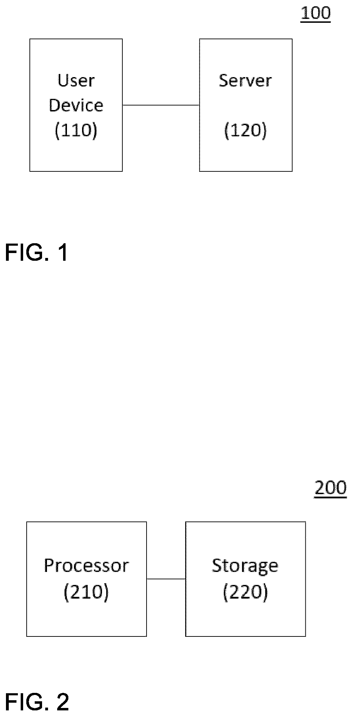

FIG. 1 shows an example system including a user device and a server. The user, using the user device 110, performs an initial registration with the server 120 (e.g., an authentication server in a network). During the initial registration, the user creates a user profile, specifying the necessary details. After completing the initial registration, the user may subsequently initiate an authentication process for accessing a service, etc. During the authentication process, the location-dependent factor is used for hardening the authentication process, which will be described in detail below.

FIG. 2 is a diagram of an example apparatus configured to perform authentication of a user. The apparatus 200 includes a processor 210 and a storage 220. The storage 220 is a machine-readable storage/medium including machine-readable instructions. The machine-readable instructions are, when executed on the processor 210, to implement a method for authentication of a user as described herein, e.g., the storage 220 is a computer-readable medium comprising a program code that, when the program code is executed on a processor, a computer, or a programmable hardware component, causes the processor, the computer, or the programmable hardware component to implement a method for authentication of a user as described herein. The apparatus 200 may be the user device 110 or the server 120. Hereafter, the apparatus 200 will be explained as the server 120 for performing the initial registration and subsequent authentication process, but the corresponding process may be performed on the user device side as well.

The processor 210 (i.e., the machine-readable instructions) is configured to generate a user profile of the user based on the information provided by the user. The user profile includes a trusted location of the user. The trusted location is a location verifiable by a service provider based on information or parameters securely transmitted to the service provider. The user selects and specifies the trusted location of the user in the user profile. The trusted location of the user may be any location that the user trusts as a secure location for accessing a service, data, etc. For example, the trusted location of the user may be a home or an office of the user, or any other place that the user designates.

Subsequently, when the user tries to access/receive the service, data, or the like (hereafter collectively "service"), an authentication process is initiated, e.g., by the user. The processor 210 is configured to perform an authentication process for the user. Authentication is the process by which a person or system verifies that they are who they say they are. Any conventional authentication protocols may be implemented to authenticate the user's identity. As a non-limiting example, FIDO may be implemented to verify the user's identity. FIDO is a set of open, standardized authentication protocols intended to ultimately eliminate the use of passwords for authentication.

In examples, in addition to performing the conventional authentication, the processor 210 may be configured to determine whether the user is located in the trusted location of the user. In examples, the authentication process may be hardened by introducing an additional layer/step of verifying the location of the user, for example by using location-based (location-dependent) parameter of the user. For example, a unique physical parameter(s) of the trusted location of the user may be captured in advance (e.g., during the initial registration) and used as an additional factor in the authentication process to verify whether the user is located in the trusted location of the user.

The processor 210 is configured to control an access to a service for the user based on a result of the authentication process and the determination whether the user is located in the trusted location of the user. The processor 210 may be configured to allow an access to a service for the user only if the authentication is successful and it is determined that the user is located in the trusted location of the user. Alternatively, the processor 210 may be configured to allow a limited access to a service (a limited level of service) for the user if the authentication is successful but it is not determined that the user is located in the trusted location of the user.

In examples, a location-based parameter of the trusted location of the user may be captured/determined and stored in the server 120 in advance, e.g., during the initial registration. The user device 110 may capture or determine the location-based parameter of the trusted location of the user and send the location-based parameter of the trusted location of the user to the server 120, and the server 120 may store the location-based parameter of the trusted location of the user. During the subsequent authentication, the user device 110 captures/determines a location-based parameter of the current location of the user and sends the captured/determined location-based parameter of the current location of the user to the server 120 (e.g., an authentication server). The processor 210 in the server 120 receives the location-based parameter of the current location of the user and determines whether the user is located in the trusted location of the user based on (e.g., by comparing/determining the similarity of) the location-based parameter of the current location of the user and the location-based parameter of the trusted location of the user.

For example, the location-based parameter may be channel state information (CSI) captured/determined in a location of the user. For example, the user device 110 may receive a radio frequency (RF) signal reflected off in the location of the user and measure/determine the CSI on the received RF reflection. RF fingerprinting is a technique used to uniquely identify a wireless devices based on their RF signal characteristics (i.e., signal features such as frequency, phase, amplitude, and time domain or frequency domain characteristics of the RF signals reflected off in the location). This RF fingerprinting may be used to uniquely identify the location of the user device. For example, the reflected RF signals are captured by the user device in the location and the unique features are extracted from the received RF signals, such as phase noise, frequency offsets, etc., and the extracted features are processed to identify a fingerprint of the location. The measured/determined CSI may be used as the location-based parameter of the user. In some examples, the CSI may be a matrix of the numbers that represent the noise of the channel/air. Conventionally, the CSI may be used to improve the transmission and reception of data (e.g., to improve error code correction based on the noise of the channel). The CSI is impacted by the transceiver, receiver, reflections, air conditions around the transmitter and receiver device, etc. The CSI is sensitive to a specific transmitter/receiver device and unique in the location. This uniqueness may be used to determine trusted/known location of the user. Alternatively, CSI can be used to identify or authenticate a device, and once CSI is used to identify the device, it can authenticate the associated AP at a home or office or any other known location. With automatic heuristics or manual assistant, a specific device can be tagged with the location.

For example, the user device 110 may receive/detect reflections of an RF signal transmitted by the user device 100 or other device (e.g., a WiFi access point (AP)) and analyze the RF signal reflections to determine/categorize the location. By analyzing the characteristics of the reflected RF signals (e.g., signal features such as frequency, phase, amplitude, and time domain or frequency domain characteristics of the RF signals), the location-based (location-specific) features can be extracted and used as the location-based parameter for the authentication purposes. This is known as "fingerprinting the environment." For example, an artificial intelligence (AI) model or a statistical model may be used to identify the same location based on the CSI. The AI model or the statistical model may be trained to correlate the characteristics of the detected RF reflections in the current location of the user to the characteristics of the RF reflections detected in the trusted location of the user to determine whether the user is in the same location (i.e., whether the user is located in the trusted location of the user). A CSI matrix in a known location can be identified by using a model (e.g., an AI model or a statistical model). By collecting CSI matrices over time, a model can process a matrix and find the similarity to its known/repeating location.

Alternatively, the processor 210 may receive an input from the user regarding a current location of the user and determine whether the user is located in the trusted location of the user based on the user input. For example, the user may input the current location of the user (e.g., home, office, or any place where the user is located), and the processor 210 may determine that the user is in the trusted location of the user based on the user's input. In this example, instead of verifying the location of the user based on the RF measurements, e.g., using a model, the user may directly indicate its location.

The example schemes disclosed herein enhance the digital authentication by incorporating trusted location-based parameters as an additional authentication parameter for hardening the authentication process. In some examples, this location-based authentication may enable security waivers in trusted locations. For example, some security requirements may be waived if it is determined that the user is located in the trusted location of the user. For example, if a bank transfer of certain amount that requires a multi-factor authentication is made from the trusted location of the user, the multi-factor authentication requirement may be waived. Alternatively, the trusted location information may be used for different level of services. For instance, in case of online banking transactions, the location information of the user may be used by the bank server as a secondary authentication factor. For example, the bank server may allow for higher transaction limits when the fund transfer request is made from the trusted location of the user (such as home or office of the user), and apply a lower transaction limit if it is not determined that the fund transfer request is made from the trusted location of the user. With this scheme, both security and user convenience can be enhanced.

The example methods disclosed herein provide immense value by offering an improved, secure, and user-friendly authentication method that leverages unique physical parameters, such as a user's trusted location. This innovation significantly strengthens security, mitigating the risk of unauthorized access and Man-in-the-Middle attacks. By integrating with FIDO technology or other security standards, the solution simplifies and hardens the authentication process, thereby fostering greater user trust and confidence in digital platforms.

In examples disclosed herein, the security of authentication process is enhanced by incorporating trusted location-based parameters as an additional factor/layer to the conventional authentication methods, such as regular FIDO authentication method. The trusted location information can provide additional security assurance to the service provider that relies on conventional authentication (e.g., FIDO authentication), thereby enabling the potential for security waivers in trusted locations.

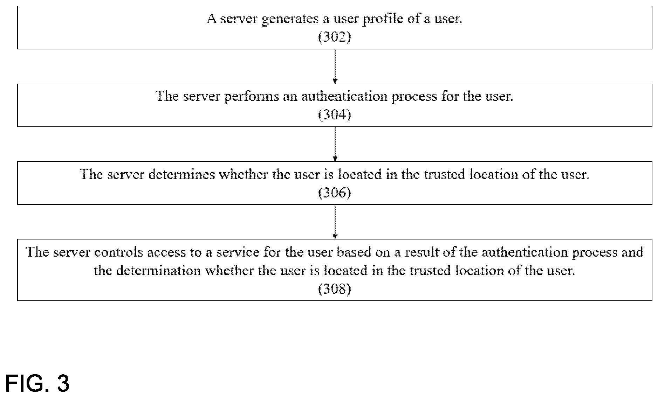

FIG. 3 is a flow diagram of an example process on a server side for authentication of a user. The user performs an initial registration. During the initial registration, a server generates a user profile of a user (302). During the initial registration, the user specifies the necessary details, and a user profile is created for the user based on the information provided by the user. The user profile includes a trusted location of the user. The user selects and specifies the trusted location of the user in the user profile. The trusted location of the user may be any location that the user trusts as a secure location for accessing a service. For example, the trusted location of the user may be a home or an office of the user, or any other location that the user designates.

Subsequently, the server performs an authentication process for the user (304). When the user tries to access the service, the authentication process is initiated for the user. For example, FIDO may be implemented to verify the user's identity.

As part of the authentication process, or alternatively after successful authentication of the user based on the conventional authentication process (e.g., FIDO authentication), the server determines whether the user is located in the trusted location of the user (306). The authentication process may be hardened by introducing an additional layer/step of verifying the location of the user, for example using the location-based (location-dependent) parameter. For example, the location-based parameter (e.g., a physical parameter unique to the location) of the user's trusted location may be captured/determined in advance (e.g., during the initial registration) and used as an additional factor in the authentication process.

The server then controls access to a service for the user based on a result of the authentication process and the determination whether the user is located in the trusted location of the user (308).

In examples, the location-based parameter of the trusted location of the user is captured/determined and stored in advance. It is then determined whether the user is located in the trusted location of the user by receiving a location-based parameter of a current location of the user and comparing the location-based parameter of the current location of the user and the location-based parameter of the trusted location of the user. As an example, the location-based parameter may be CSI captured/determined by a user device. For example, characteristics of RF reflections in the location may be determined and used as the location-based parameter.

Alternatively, an input may be received from the user regarding the current location of the user, and it may be determined whether the user is located in the trusted location of the user based on the input from the user. For example, the user may input that the user is at home or an office, and it may be determined whether the user is located in the trusted location of the user based on the input from the user.

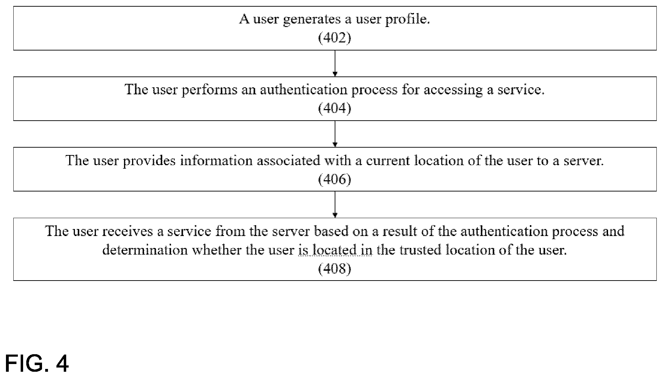

FIG. 4 is a flow diagram of an example process on a user side for authentication of a user. A user generates a user profile (402). The user profile is generated during an initial registration. During the initial registration, the user specifies the necessary details, and the user profile is created for the user. The user profile includes a trusted location of the user. The user selects and specifies the trusted location of the user in the user profile. The trusted location of the user may be any location that the user trusts as a secure location for accessing a service, etc. For example, the trusted location of the user may be a home or an office of the user.

Subsequently, the user performs an authentication process for accessing a service (404). When the user tries to access the service, the authentication process may be initiated by the user. For example, the authentication process may be FIDO authentication.

The user provides information associated with a current location of the user to a server (406). In examples, a location-based parameter of the trusted location of the user may be captured/determined and stored in advance. During the subsequent authentication process, the user captures/determines a location-based parameter of the current location of the user and sends the location-based parameter to a network server (authentication server). It is then determined whether the user is located in the trusted location of the user by comparing the location-based parameter of the current location of the user and the location-based parameter of the trusted location of the user. For example, the location-based parameter is channel state information determined by a user device of the user in response to a radio frequency radiation. Alternatively, the user may provide an input regarding a current location of the user, and it may be determined whether the user is located in the trusted location of the user based on the input from the user regarding the current location of the user.

The user then receives a service from the server based on a result of the authentication process and determination whether the user is located in the trusted location of the user (408).

In some examples, a user device or another user device paired with the user device may remain unlocked if it is determined that the user is located in the trusted location of the user. A user device may have an automatic locking feature such that a user device may automatically lock if the user device is not used for a certain period of time (e.g., one minute, two minutes, etc.). In some examples, the automatic locking feature may be disabled, and the user device or another user device paired with the user device may remain unlocked if it is determined that the user of the user device is located in the trusted location of the user.

A user device may be unlocked by using facial recognition or voice recognition. In some examples, unlocking the user device using facial recognition or voice recognition may be enabled only if it is determined that the user is located in the trusted location of the user. The feature of unlocking by facial recognition or voice recognition may be enabled only if it is determined that the user is located in the trusted location of the user.

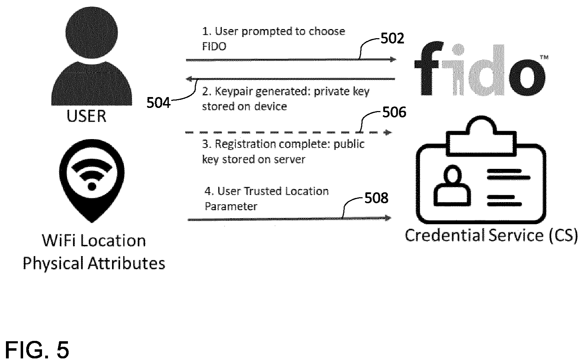

FIG. 5 illustrates an example case of FIDO-based authentication with trusted location verification. FIDO authentication is a set of standards designed to enhance online security by reducing reliance on passwords. FIDO uses cryptographic authentication methods that are more secure.

The user performs initial registration. For example, the user, using a user device, visits a website or service that supports FIDO authentication and performs the initial registration. The user is prompted to choose FIDO (502). The user may be prompted to register a FIDO authenticator, such as a biometric device (fingerprint, face recognition, etc.), a hardware security key, or a software-based authenticator, etc. The user then creates a user profile, specifying all necessary details. The user profile may include a trusted location of the user.

The user device generates a public-private key pair for FIDO authentication. The private key is stored securely in the user device (504), while the public key is sent to the server and stored in the server (506). The server stores the public key along with other user-specific metadata (e.g., user profile) in its database. In some examples, the user device captures/determines the location-based parameter of the trusted location of the user and sends the location-based parameter of the trusted location of the user to the server to be used for the subsequent authentication for the user (508).

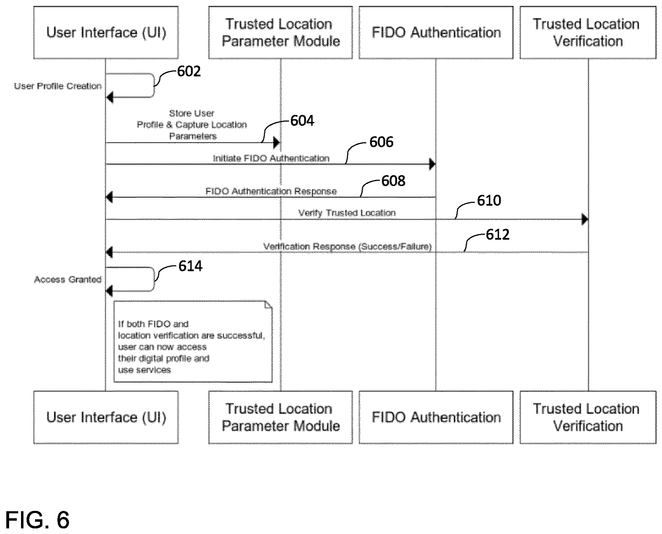

FIG. 6 is a signaling diagram of an example process for authentication of a user. The user creates a profile, e.g., during an initial registration (602). The user specifies necessary details for the registration. The user profile includes a trusted location(s) and/or device(s) of the user. For example, the user may specify the user's home or office as the trusted location of the user.

The user device captures/determines the physical parameters (location-based parameters) of the trusted location of the user (e.g., home, office, etc.) and sends it to the server, and the server stores the user profile and the location-based parameters of the trusted location of the user (604). For example, the location-based parameters may be channel state information captured/determined by the user device based on RF signal reflections in the location of the user.

After completing the initial registration process, the user may subsequently initiate an authentication process (606). The authentication process may be based on FIDO standard or any conventional authentication standards. This authentication process may involve a password, biometric data, a hardware token, or the like. For example, the user may sign on to a FIDO-enabled product or service by simply providing a fingerprint, speaking into a microphone, looking into a camera, or entering a personal identification number (PIN) or password, depending on the technology available on the user's device and the authentication methods accepted by the product or service.

An authentication response (e.g., a FIDO authentication response) is generated depending on the result (either success or failure) of the authentication process (608).

Once the authentication is successful (or alternatively as part of the authentication process), the system may verify the location of the user as an additional step to harden the authentication process, i.e., whether the user is located in the trusted location of the user (610). For example, the user device captures/determines the location-based parameter of the current location of the user and sends the location-based parameter of the current location of the user to the server (e.g., the trusted location verification module). The location verification module then compares the received location-based parameter of the current location of the user with the registered location-based parameter of the trusted location of the user. The location verification module sends a verification response (either success or failure) to the user (612). In some examples, if both the FIDO authentication and the trusted location verification are successful, the user may gain access to the service (614). Alternatively, a different level of service may be provided to the user depending on whether the user is located in the trusted location of the user.

The example schemes disclosed herein can be used across various platforms for personal identification, access control, personalization, professional or social networking, healthcare, e-learning, e-government services, online gaming, and the like.

In some examples, user devices (such as mobile phones, smart phones, smartwatches, fitness bands, laptops, tablets, Bluetooth speaker, headphone, earphone, or the like) may have a capability of on-body detection. For example, user devices may have a sensor to detect that the user devices are in a hand or pocket of the user. In some examples, a user device may stay unlocked if it is determined that the user device is in the user's hand or pocket. If the user puts the user device in different places such as on a table, the user device detects it and locks itself automatically to prevent unauthorized access.

User devices (such as mobile phones, smart phones, smartwatches, fitness bands, laptops, tablets, Bluetooth speaker, headphone, earphone, or the like) may be paired each other via Bluetooth, WiFi, or any peer-to-peer communication protocols. In some examples, a user device may be paired with the trusted user device (the device that has been verified to be located in the user's trusted location), and once paired, the user device paired to the trusted user device may stay unlocked until the user device is disconnected from the trusted user device or until the user device has been inactive for a certain period of time (e.g., 2 minutes, 3 minutes, 4 minutes, or the like).

In some examples, the user device that has been verified to be located in the trusted location of the user may remain unlocked. With this feature, the user may select a certain location (such as home or office of the user) as a trusted place where the user device remains unlocked. Once it is determined that the user is in the trusted location of the user, the user device may stay unlocked until the user (the user device) moves out of the trusted location of the user or the device has been inactive for a certain period of time (e.g., 2 minutes, 3 minutes, 4 minutes, etc.). For example, the network (e.g., an authentication server) determines that the user is in the trusted location of the user as explained above and sends a signal to the user device if it is determined that the user device is in the trusted location of the user. Alternatively, the user device may determine on its own that the user device is located in the trusted location of the user. The user device may then remain unlocked until the user (the user device) moves out of the trusted location of the user or has been inactive for certain period of time.

User devices (e.g., smart phones, etc.) may be unlocked by facial recognition. While it has been around for over a decade, facial recognition has not always been reliable due to the ability to trick the phone with a photo or a computer-generated mask. The use of facial features for unlocking a device or for authentication purposes is considered less secure than traditional authentication schemes such as passwords. In some examples, the facial recognition may be enabled for authentication only if it is determined that the user device is located in the trusted location of the user and may be disabled if it is determined that the user device is not located in the trusted location of the user.

The network (e.g., an authentication server) determines that the user is in the trusted location of the user as explained above. The network may send a signal to the user device if it is determined that the user device is in the trusted location of the user. Alternatively, the user device may determine on its own that the user device is located in the trusted location of the user. The user device may then enable facial recognition for authentication until the user (the user device) moves out of the trusted location of the user or has been inactive for certain period of time.

User devices (e.g., smart phones) may be unlocked by voice recognition as well. While voice recognition has become a common feature in many devices, it is not the most secure option. The sound of the user's voice can vary depending on tone, volume, and distance, and the technology may take liberties when accepting the user's voice. Additionally, unlike traditional data, a voice cannot be encrypted, making it less suitable for security purposes. In some examples, the voice recognition may be enabled for authentication only if it is determined that the user device is located in the trusted location of the user and may be disabled if it is determined that the user device is not located in the trusted location of the user.

The network (e.g., an authentication server) determines that the user is in the trusted location of the user as explained above. The network may send a signal to the user device if it is determined that the user device is in the trusted location of the user. Alternatively, the user device may determine on its own that the user device is located in the trusted location of the user. The user device may then enable voice recognition for authentication until the user (the user device) moves out of the trusted location of the user or has been inactive for certain period of time.

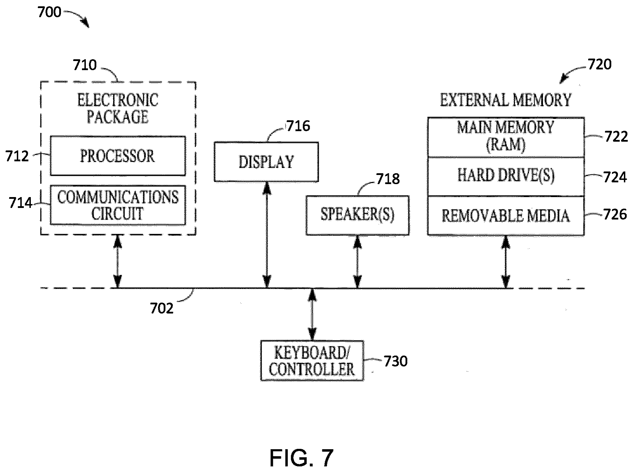

FIG. 7 is a block diagram of an electronic apparatus 700 incorporating at least one electronic assembly and/or method described herein. Electronic apparatus 700 is-merely one example of an electronic apparatus in which forms of the electronic assemblies and/or methods described herein may be used. Examples of an electronic apparatus 700 include, but are not limited to, personal computers, tablet computers, mobile telephones, game devices, MP3 or other digital music players, etc. In this example, electronic apparatus 700 comprises a data processing system that includes a system bus 702 to couple the various components of the electronic apparatus 700. System bus 702 provides communications links among the various components of the electronic apparatus 700 and may be implemented as a single bus, as a combination of busses, or in any other suitable manner.

An electronic assembly 710 as describe herein may be coupled to system bus 702. The electronic assembly 710 may include any circuit or combination of circuits. In one embodiment, the electronic assembly 710 includes a processor 712 which can be of any type. As used herein, "processor" means any type of computational circuit, such as but not limited to a microprocessor, a microcontroller, a complex instruction set computing (CISC) microprocessor, a reduced instruction set computing (RISC) microprocessor, a very long instruction word (VLIW) microprocessor, a graphics processor, a digital signal processor (DSP), multiple core processor, or any other type of processor or processing circuit.

Other types of circuits that may be included in electronic assembly 710 are a custom circuit, an application-specific integrated circuit (ASlC), or the like, such as, for example, one or more circuits (such as a communications circuit 714) for use in wireless devices like mobile telephones, tablet computers, laptop computers, two-way radios, and similar electronic systems. The IC can perform any other type of function.

The electronic apparatus 700 may also include an external memory 720, which in turn may include one or more memory elements suitable to the particular application, such as a main memory 722 in the form of random access memory (RAM), one or more hard drives 724, and/or one or more drives that handle removable media 726 such as compact disks (CD), flash memory cards, digital video disk (DVD), and the like.

The electronic apparatus 700 may also include a display device 716, one or more speakers 718, and a keyboard and/or controller 730, which can include a mouse, trackball, touch screen, voice-recognition device, or any other device that permits a system user to input information into and receive information from the electronic apparatus 700.

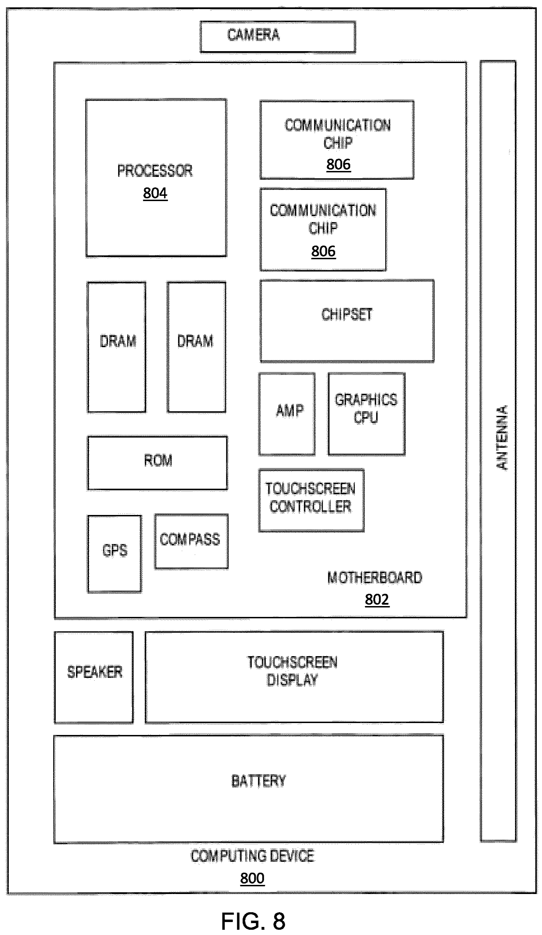

FIG. 8 illustrates a computing device 800 in accordance with one implementation of the invention. The computing device 800 houses a board 802. The board 802 may include a number of components, including but not limited to a processor 804 and at least one communication chip 806. The processor 804 is physically and electrically coupled to the board 802. In some implementations the at least one communication chip 806 is also physically and electrically coupled to the board 802. In further implementations, the communication chip 806 is part of the processor 804. Depending on its applications, computing device 800 may include other components that may or may not be physically and electrically coupled to the board 802. These other components include, but are not limited to, volatile memory (e.g., DRAM), non-volatile memory (e.g., ROM), flash memory, a graphics processor, a digital signal processor, a crypto processor, a chipset, an antenna, a display, a touchscreen display, a touchscreen controller, a battery, an audio codec, a video codec, a power amplifier, a global positioning system (GPS) device, a compass, an accelerometer, a gyroscope, a speaker, a camera, and a mass storage device (such as hard disk drive, compact disk (CD), digital versatile disk (DVD), and so forth). The communication chip 806 enables wireless communications for the transfer of data to and from the computing device 800. The term "wireless" and its derivatives may be used to describe circuits, devices, systems, methods, techniques, communications channels, etc., that may communicate data through the use of modulated electromagnetic radiation through a non- solid medium. The term does not imply that the associated devices do not contain any wires, although in some embodiments they might not. The communication chip 806 may implement any of a number of wireless standards or protocols, including but not limited to Wi-Fi (IEEE 802.11 family), WiMAX (IEEE 802.16 family), IEEE 802.20, long term evolution (LTE), Ev-DO, HSPA+, HSDPA+, HSUPA+, EDGE, GSM, GPRS, CDMA, TDMA, DECT, Bluetooth, derivatives thereof, as well as any other wireless protocols that are designated as 3G, 4G, 5G, and beyond. The computing device 800 may include a plurality of communication chips 806. For instance, a first communication chip 806 may be dedicated to shorter range wireless communications such as Wi-Fi and Bluetooth and a second communication chip 806 may be dedicated to longer range wireless communications such as GPS, EDGE, GPRS, CDMA, WiMAX, LTE, Ev-DO, and others. The processor 804 of the computing device 800 includes an integrated circuit die packaged within the processor 804. In some implementations of the invention, the integrated circuit die of the processor includes one or more devices that are assembled in an ePLB or eWLB based P0P package that that includes a mold layer directly contacting a substrate, in accordance with implementations of the invention. The term "processor" may refer to any device or portion of a device that processes electronic data from registers and/or memory to transform that electronic data into other electronic data that may be stored in registers and/or memory. The communication chip 806 also includes an integrated circuit die packaged within the communication chip 806. In accordance with another implementation of the invention, the integrated circuit die of the communication chip includes one or more devices that are assembled in an ePLB or eWLB based P0P package that that includes a mold layer directly contacting a substrate, in accordance with implementations of the invention.

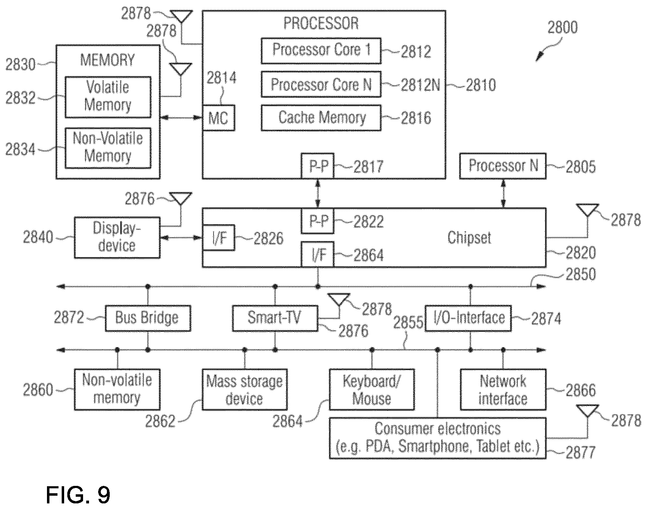

FIG. 9 is included to show an example of a higher-level device application for the disclosed embodiments. The MAA cantilevered heat pipe apparatus embodiments may be found in several parts of a computing system. In an embodiment, the MAA cantilevered heat pipe is part of a communications apparatus such as is affixed to a cellular communications tower. The MAA cantilevered heat pipe may also be referred to as an MAA apparatus. In an embodiment, a computing system 2800 includes, but is not limited to, a desktop computer. In an embodiment, a system 2800 includes, but is not limited to a laptop computer. In an embodiment, a system 2800 includes, but is not limited to a netbook. In an embodiment, a system 2800 includes, but is not limited to a tablet. In an embodiment, a system 2800 includes, but is not limited to a notebook computer. In an embodiment, a system 2800 includes, but is not limited to a personal digital assistant (PDA). In an embodiment, a system 2800 includes, but is not limited to a server. In an embodiment, a system 2800 includes, but is not limited to a workstation. In an embodiment, a system 2800 includes, but is not limited to a cellular telephone. In an embodiment, a system 2800 includes, but is not limited to a mobile computing device. In an embodiment, a system 2800 includes, but is not limited to a smart phone. In an embodiment, a system 2800 includes, but is not limited to an internet appliance. Other types of computing devices may be configured with the microelectronic device that includes MAA apparatus embodiments.

In an embodiment, the processor 2810 has one or more processing cores 2812 and 2812N, where 2812N represents the Nth processor core inside processor 2810 where N is a positive integer. In an embodiment, the electronic device system 2800 using a MAA apparatus embodiment that includes multiple processors including 2810 and 2805, where the processor 2805 has logic similar or identical to the logic of the processor 2810. In an embodiment, the processing core 2812 includes, but is not limited to, pre-fetch logic to fetch instructions, decode logic to decode the instructions, execution logic to execute instructions and the like. In an embodiment, the processor 2810 has a cache memory 2816 to cache at least one of instructions and data for the MAA apparatus in the system 2800. The cache memory 2816 may be organized into a hierarchal structure including one or more levels of cache memory.

In an embodiment, the processor 2810 includes a memory controller 2814, which is operable to perform functions that enable the processor 2810 to access and communicate with memory 2830 that includes at least one of a volatile memory 2832 and a non-volatile memory 2834. In an embodiment, the processor 2810 is coupled with memory 2830 and chipset 2820. The processor 2810 may also be coupled to a wireless antenna 2878 to communicate with any device configured to at least one of transmit and receive wireless signals. In an embodiment, the wireless antenna interface 2878 operates in accordance with, but is not limited to, the IEEE 802.11 standard and its related family, Home Plug AV (HPAV), Ultra Wide Band (UWB), Bluetooth, WiMax, or any form of wireless communication protocol.

In an embodiment, the volatile memory 2832 includes, but is not limited to, Synchronous Dynamic Random Access Memory (SDRAM), Dynamic Random Access Memory (DRAM), RAMBUS Dynamic Random Access Memory (RDRAM), and/or any other type of random access memory device. The non-volatile memory 2834 includes, but is not limited to, flash memory, phase change memory (PCM), read-only memory (ROM), electrically erasable programmable read-only memory (EEPROM), or any other type of non-volatile memory device.

The memory 2830 stores information and instructions to be executed by the processor 2810. In an embodiment, the memory 2830 may also store temporary variables or other intermediate information while the processor 2810 is executing instructions. In the illustrated embodiment, the chipset 2820 connects with processor 2810 via Point-to-Point (PtP or P-P) interfaces 2817 and 2822. Either of these PtP embodiments may be achieved using a MAA apparatus embodiment as set forth in this disclosure. The chipset 2820 enables the processor 2810 to connect to other elements in the MAA apparatus embodiments in a system 2800. In an embodiment, interfaces 2817 and 2822 operate in accordance with a PtP communication protocol such as the Intel^{®} QuickPath Interconnect (QPI) or the like. In other embodiments, a different interconnect may be used.

In an embodiment, the chipset 2820 is operable to communicate with the processor 2810, 2805N, the display device 2840, and other devices 2872, 2876, 2874, 2860, 2862, 2864, 2866, 2877, etc. The chipset 2820 may also be coupled to a wireless antenna 2878 to communicate with any device configured to at least do one of transmit and receive wireless signals.

The chipset 2820 connects to the display device 2840 via the interface 2826. The display 2840 may be, for example, a liquid crystal display (LCD), a plasma display, cathode ray tube (CRT) display, or any other form of visual display device. In and embodiment, the processor 2810 and the chipset 2820 are merged into a MAA apparatus in a system. Additionally, the chipset 2820 connects to one or more buses 2850 and 2855 that interconnect various elements 2874, 2860, 2862, 2864, and 2866. Buses 2850 and 2855 may be interconnected together via a bus bridge 2872 such as at least one MAA apparatus embodiment. In an embodiment, the chipset 2820 couples with a non-volatile memory 2860, a mass storage device(s) 2862, a keyboard/mouse 2864, and a network interface 2866 by way of at least one of the interface 2824 and 2874, the smart TV 2876, and the consumer electronics 2877, etc.

In an embodiment, the mass storage device 2862 includes, but is not limited to, a solid state drive, a hard disk drive, a universal serial bus flash memory drive, or any other form of computer data storage medium. In one embodiment, the network interface 2866 is implemented by any type of well-known network interface standard including, but not limited to, an Ethernet interface, a universal serial bus (USB) interface, a Peripheral Component Interconnect (PCI) Express interface, a wireless interface and/or any other suitable type of interface. In one embodiment, the wireless interface operates in accordance with, but is not limited to, the IEEE 802.11 standard and its related family, Home Plug AV (HPAV), Ultra Wide Band (UWB), Bluetooth, WiMax, or any form of wireless communication protocol.

While the modules shown in FIG. 9 are depicted as separate blocks within the MAA apparatus embodiment in a computing system 2800, the functions performed by some of these blocks may be integrated within a single semiconductor circuit or may be implemented using two or more separate integrated circuits. For example, although cache memory 2816 is depicted as a separate block within processor 2810, cache memory 2816 (or selected aspects of 2816) can be incorporated into the processor core 2812.

Where useful, the computing system 2800 may have a broadcasting structure interface such as for affixing the MAA apparatus to a cellular tower.

As used herein, the term "module" refers to logic that may be implemented in a hardware component or device, software or firmware running on a processing unit, or a combination thereof, to perform one or more operations consistent with the present disclosure. Software and firmware may be embodied as instructions and/or data stored on non-transitory computer-readable storage media. As used herein, the term "circuitry" can comprise, singly or in any combination, non-programmable (hardwired) circuitry, programmable circuitry such as processing units, state machine circuitry, and/or firmware that stores instructions executable by programmable circuitry. Modules described herein may, collectively or individually, be embodied as circuitry that forms a part of a computing system. Thus, any of the modules can be implemented as circuitry. A computing system referred to as being programmed to perform a method can be programmed to perform the method via software, hardware, firmware, or combinations thereof.

Any of the disclosed methods (or a portion thereof) can be implemented as computer-executable instructions or a computer program product. Such instructions can cause a computing system or one or more processing units capable of executing computer-executable instructions to perform any of the disclosed methods. As used herein, the term "computer" refers to any computing system or device described or mentioned herein. Thus, the term "computer-executable instruction" refers to instructions that can be executed by any computing system or device described or mentioned herein.

The computer-executable instructions or computer program products as well as any data created and/or used during implementation of the disclosed technologies can be stored on one or more tangible or non-transitory computer-readable storage media, such as volatile memory (e.g., DRAM, SRAM), non-volatile memory (e.g., flash memory, chalcogenide-based phase-change non-volatile memory) optical media discs (e.g., DVDs, CDs), and magnetic storage (e.g., magnetic tape storage, hard disk drives). Computer-readable storage media can be contained in computer-readable storage devices such as solid-state drives, USB flash drives, and memory modules. Alternatively, any of the methods disclosed herein (or a portion) thereof may be performed by hardware components comprising non-programmable circuitry. In some examples, any of the methods herein can be performed by a combination of non-programmable hardware components and one or more processing units executing computer-executable instructions stored on computer-readable storage media.

The computer-executable instructions can be part of, for example, an operating system of the computing system, an application stored locally to the computing system, or a remote application accessible to the computing system (e.g., via a web browser). Any of the methods described herein can be performed by computer-executable instructions performed by a single computing system or by one or more networked computing systems operating in a network environment. Computer-executable instructions and updates to the computer-executable instructions can be downloaded to a computing system from a remote server.

Further, it is to be understood that implementation of the disclosed technologies is not limited to any specific computer language or program. For instance, the disclosed technologies can be implemented by software written in C++, C#, Java, Perl, Python, JavaScript, Adobe Flash, C#, assembly language, or any other programming language. Likewise, the disclosed technologies are not limited to any particular computer system or type of hardware.

Furthermore, any of the software-based examples (comprising, for example, computer-executable instructions for causing a computer to perform any of the disclosed methods) can be uploaded, downloaded, or remotely accessed through a suitable communication means. Such suitable communication means include, for example, the Internet, the World Wide Web, an intranet, cable (including fiber optic cable), magnetic communications, electromagnetic communications (including RF, microwave, ultrasonic, and infrared communications), electronic communications, or other such communication means.

As used in this application and the claims, a list of items joined by the term "and/or" can mean any combination of the listed items. For example, the phrase "A, B and/or C" can mean A; B; C; A and B; A and C; B and C; or A, B and C. As used in this application and the claims, a list of items joined by the term "at least one of" can mean any combination of the listed terms. For example, the phrase "at least one of A, B or C" can mean A; B; C; A and B; A and C; B and C; or A, B, and C. Moreover, as used in this application and the claims, a list of items joined by the term "one or more of" can mean any combination of the listed terms. For example, the phrase "one or more of A, B and C" can mean A; B; C; A and B; A and C; B and C; or A, B, and C.

The disclosed methods, apparatuses, and systems are not to be construed as limiting in any way. Instead, the present disclosure is directed toward all novel and nonobvious features and aspects of the various disclosed examples, alone and in various combinations and subcombinations with one another. The disclosed methods, apparatuses, and systems are not limited to any specific aspect or feature or combination thereof, nor do the disclosed examples require that any one or more specific advantages be present or problems be solved.

Theories of operation, scientific principles, or other theoretical descriptions presented herein in reference to the apparatuses or methods of this disclosure have been provided for the purposes of better understanding and are not intended to be limiting in scope. The apparatuses and methods in the appended claims are not limited to those apparatuses and methods that function in the manner described by such theories of operation.

Although the operations of some of the disclosed methods are described in a particular, sequential order for convenient presentation, it is to be understood that this manner of description encompasses rearrangement, unless a particular ordering is required by specific language set forth herein. For example, operations described sequentially may in some cases be rearranged or performed concurrently. Moreover, for the sake of simplicity, the attached figures may not show the various ways in which the disclosed methods can be used in conjunction with other methods.

Another example is a computer program having a program code for performing at least one of the methods described herein, when the computer program is executed on a computer, a processor, or a programmable hardware component. Another example is a machine-readable storage including machine readable instructions, when executed, to implement a method or realize an apparatus as described herein. A further example is a machine-readable medium including code, when executed, to cause a machine to perform any of the methods described herein.

The examples as described herein may be summarized as follows:
An example (e.g., example 1) relates to computer-readable medium comprising a program code that, when the program code is executed on a processor, a computer, or a programmable hardware component, causes the processor, the computer, or the programmable hardware component to generate a user profile of a user, the user profile including a trusted location of the user, wherein the trusted location is a location verifiable by a service provider based on information or parameters securely transmitted to the service provider, perform an authentication process for the user, determine whether the user is located in the trusted location of the user, and control an access to a service for the user based on a result of the authentication process and the determination whether the user is located in the trusted location of the user.

Another example, (e.g., example 2) relates to a previously described example (e.g., example 1), wherein a location-based parameter of the trusted location of the user is determined and stored in advance, and the program code is configured to determine whether the user is located in the trusted location of the user by receiving a location-based parameter of a current location of the user, and comparing the location-based parameter of the current location of the user and the location-based parameter of the trusted location of the user.

Another example, (e.g., example 3) relates to a previously described example (e.g., example 2), wherein the location-based parameter of the trusted location of the user and the location-based parameter of the current location of the user are channel state information determined by a user device of the user based on radio frequency signal reflection in the trusted location of the user and the current location of the user, respectively.

Another example, (e.g., example 4) relates to a previously described example (e.g., any one of examples 1-3), wherein the program code is configured to receive an input from the user regarding a current location of the user, and determine whether the user is located in the trusted location of the user based on the input from the user.

Another example, (e.g., example 5) relates to a previously described example (e.g., any one of examples 1-4), wherein the authentication process is a FIDO authentication process.

Another example, (e.g., example 6) relates to a previously described example (e.g., any one of examples 1-5), wherein the trusted location of the user is a home or an office of the user.

An example (e.g., example 7) relates to a computer-readable medium comprising a program code that, when the program code is executed on a processor, a computer, or a programmable hardware component, causes the processor, the computer, or the programmable hardware component to generate a user profile of a user, the user profile including a trusted location of the user, wherein the trusted location is a location verifiable by a service provider based on information or parameters securely transmitted to the service provider, initiate an authentication process for the user, provide information associated with a current location of the user to a server, and receive a service from the server based on a result of the authentication process and determination whether the user is located in the trusted location of the user.

Another example, (e.g., example 8) relates to a previously described example (e.g., example 7), wherein the program code is configured to determine a location-based parameter of the trusted location of the user and send the location-based parameter of the trusted location of the user to the server, and determine a location-based parameter of a current location of the user and send the location-based parameter of the current location of the user, as the information associated with the current location of the user, to the server.

Another example, (e.g., example 9) relates to a previously described example (e.g., example 8), wherein the location-based parameter of the trusted location of the user and the location-based parameter of the current location of the user are channel state information determined by a user device of the user based on radio frequency signal reflection in the trusted location of the user and the current location of the user, respectively.

Another example, (e.g., example 10) relates to a previously described example (e.g., any one of examples 7-9), wherein the information associated with the current location of the user is an input of the current location of the user.

Another example, (e.g., example 11) relates to a previously described example (e.g., any one of examples 7-10), wherein the authentication process is a FIDO authentication process.

Another example, (e.g., example 12) relates to a previously described example (e.g., any one of examples 7-11), wherein the trusted location of the user is a home or an office of the user.

Another example, (e.g., example 13) relates to a previously described example (e.g., any one of examples 7-12), wherein the program code is configured to unlock a user device of the user if it is determined that the user is located in the trusted location of the user.

Another example, (e.g., example 14) relates to a previously described example (e.g., any one of examples 7-13), wherein the program code is configured to enable unlocking a user device of the user using facial recognition or voice recognition only if it is determined that the user is located in the trusted location of the user.

An example (e.g., example 15) relates to an apparatus for authentication of a user, comprising a processor and a storage, wherein the processor is configured to generate a user profile of a user, the user profile including a trusted location of the user, wherein the trusted location is a location verifiable by a service provider based on information or parameters securely transmitted to the service provider, perform an authentication process for the user, determine whether the user is located in the trusted location of the user, and control an access to a service for the user based on a result of the authentication process and the determination whether the user is located in the trusted location of the user.

Another example, (e.g., example 16) relates to a previously described example (e.g., example 15), wherein a location-based parameter of the trusted location of the user is determined and stored in advance, and the processor is configured to receive a location-based parameter of a current location of the user, and determine whether the user is located in the trusted location of the user by comparing the location-based parameter of the current location of the user and the location-based parameter of the trusted location of the user.

Another example, (e.g., example 17) relates to a previously described example (e.g., example 16), wherein the location-based parameter of the trusted location of the user and the location-based parameter of the current location of the user are channel state information determined by a user device of the user based on radio frequency signal reflection in the trusted location of the user and the current location of the user, respectively.

Another example, (e.g., example 18) relates to a previously described example (e.g., any one of examples 15-17), wherein the processor is configured to receive an input from the user regarding a current location of the user and determine whether the user is located in the trusted location of the user based on the input from the user.

Another example, (e.g., example 19) relates to a previously described example (e.g., any one of examples 15-18), wherein the authentication process is a FIDO authentication process.

Another example, (e.g., example 20) relates to a previously described example (e.g., any one of examples 15-19), wherein the trusted location of the user is a home or an office of the user.

Another example (e.g., example 21) relates to a method for authentication of a user, comprising generating a user profile of a user, the user profile including a trusted location of the user, performing an authentication process for the user, determining whether the user is located in the trusted location of the user, and controlling an access to a service for the user based on a result of the authentication process and the determination whether the user is located in the trusted location of the user.

Another example, (e.g., example 22) relates to a previously described example (e.g., example 21), wherein a location-based parameter of the trusted location of the user is determined and stored in advance, and it is determined whether the user is located in the trusted location of the user by receiving a location-based parameter of a current location of the user, and comparing the location-based parameter of the current location of the user and the location-based parameter of the trusted location of the user.

Another example, (e.g., example 23) relates to a previously described example (e.g., example 22), wherein the location-based parameter of the trusted location of the user and the location-based parameter of the current location of the user are channel state information determined by a user device of the user based on radio frequency signal reflection in the trusted location of the user and the current location of the user, respectively.

Another example, (e.g., example 24) relates to a previously described example (e.g., any one of examples 21-23), wherein an input is received from the user regarding a current location of the user, and it is determined whether the user is located in the trusted location of the user based on the input from the user.

Another example, (e.g., example 25) relates to a previously described example (e.g., any one of examples 21-24), wherein the authentication process is a FIDO authentication process.

Another example, (e.g., example 26) relates to a previously described example (e.g., any one of examples 21-25), wherein the trusted location of the user is a home or an office of the user.

Another example (e.g., example 27) relates to a method for authentication of a user, comprising generating a user profile of a user, the user profile including a trusted location of the user, wherein the trusted location is a location verifiable by a service provider based on information or parameters securely transmitted to the service provider, initiating an authentication process for the user, providing information associated with a current location of the user to a server, and receiving a service from the server based on a result of the authentication process and determination whether the user is located in the trusted location of the user.

Another example, (e.g., example 28) relates to a previously described example (e.g., example 27), wherein a location-based parameter of the trusted location of the user is determined and the location-based parameter of the trusted location of the user is sent to the server, and a location-based parameter of a current location of the user is determined and sent, as the information associated with the current location of the user, to the server.

Another example, (e.g., example 29) relates to a previously described example (e.g., example 28), wherein the location-based parameter of the trusted location of the user and the location-based parameter of the current location of the user are channel state information determined by a user device of the user based on radio frequency signal reflection in the trusted location of the user and the current location of the user, respectively.

Another example, (e.g., example 30) relates to a previously described example (e.g., any one of examples 27-29), wherein the information associated with the current location of the user is an input of the current location of the user.

Another example, (e.g., example 31) relates to a previously described example (e.g., any one of examples 27-30), wherein the authentication process is a FIDO authentication process.

Another example, (e.g., example 32) relates to a previously described example (e.g., any one of examples 27-31), wherein the trusted location of the user is a home or an office of the user.

Another example, (e.g., example 33) relates to a previously described example (e.g., any one of examples 27-32), wherein a user device of the user is unlocked if it is determined that the user is located in the trusted location of the user.

Another example, (e.g., example 34) relates to a previously described example (e.g., any one of examples 27-33), wherein unlocking a user device of the user using facial recognition or voice recognition is enabled only if it is determined that the user is located in the trusted location of the user.

The aspects and features mentioned and described together with one or more of the previously detailed examples and figures, may as well be combined with one or more of the other examples in order to replace a like feature of the other example or in order to additionally introduce the feature to the other example.

Examples may further be or relate to a computer program having a program code for performing one or more of the above methods, when the computer program is executed on a computer or processor. Steps, operations or processes of various above-described methods may be performed by programmed computers or processors. Examples may also cover program storage devices such as digital data storage media, which are machine, processor or computer readable and encode machine-executable, processor-executable or computer-executable programs of instructions. The instructions perform or cause performing some or all of the acts of the above-described methods. The program storage devices may comprise or be, for instance, digital memories, magnetic storage media such as magnetic disks and magnetic tapes, hard drives, or optically readable digital data storage media. Further examples may also cover computers, processors or control units programmed to perform the acts of the above-described methods or (field) programmable logic arrays ((F)PLAs) or (field) programmable gate arrays ((F)PGAs), programmed to perform the acts of the above-described methods.

The description and drawings merely illustrate the principles of the disclosure. Furthermore, all examples recited herein are principally intended expressly to be only for pedagogical purposes to aid the reader in understanding the principles of the disclosure and the concepts contributed by the inventor(s) to furthering the art. All statements herein reciting principles, aspects, and examples of the disclosure, as well as specific examples thereof, are intended to encompass equivalents thereof.

A functional block denoted as "means for ..." performing a certain function may refer to a circuit that is configured to perform a certain function. Hence, a "means for s.th." may be implemented as a "means configured to or suited for s.th.", such as a device or a circuit configured to or suited for the respective task.

Functions of various elements shown in the figures, including any functional blocks labeled as "means", "means for providing a sensor signal", "means for generating a transmit signal.", etc., may be implemented in the form of dedicated hardware, such as "a signal provider", "a signal processing unit", "a processor", "a controller", etc. as well as hardware capable of executing software in association with appropriate software. When provided by a processor, the functions may be provided by a single dedicated processor, by a single shared processor, or by a plurality of individual processors, some of which or all of which may be shared. However, the term "processor" or "controller" is by far not limited to hardware exclusively capable of executing software but may include digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included.

A block diagram may, for instance, illustrate a high-level circuit diagram implementing the principles of the disclosure. Similarly, a flow chart, a flow diagram, a state transition diagram, a pseudo code, and the like may represent various processes, operations or steps, which may, for instance, be substantially represented in computer readable medium and so executed by a computer or processor, whether or not such computer or processor is explicitly shown. Methods disclosed in the specification or in the claims may be implemented by a device having means for performing each of the respective acts of these methods.

It is to be understood that the disclosure of multiple acts, processes, operations, steps or functions disclosed in the specification or claims may not be construed as to be within the specific order, unless explicitly or implicitly stated otherwise, for instance for technical reasons. Therefore, the disclosure of multiple acts or functions will not limit these to a particular order unless such acts or functions are not interchangeable for technical reasons. Furthermore, in some examples a single act, function, process, operation or step may include or may be broken into multiple sub-acts, -functions, -processes, -operations or -steps, respectively. Such sub acts may be included and part of the disclosure of this single act unless explicitly excluded.

Furthermore, the following claims are hereby incorporated into the detailed description, where each claim may stand on its own as a separate example. While each claim may stand on its own as a separate example, it is to be noted that - although a dependent claim may refer in the claims to a specific combination with one or more other claims - other examples may also include a combination of the dependent claim with the subject matter of each other dependent or independent claim. Such combinations are explicitly proposed herein unless it is stated that a specific combination is not intended. Furthermore, it is intended to include also features of a claim to any other independent claim even if this claim is not directly made dependent to the independent claim.

## Claims

1. A computer-readable medium comprising a program code that, when the program code is executed on a processor, a computer, or a programmable hardware component, causes the processor, the computer, or the programmable hardware component to:
generate (302) a user profile of a user, the user profile including a trusted location of the user,
wherein the trusted location is a location verifiable by a service provider based on information or parameters securely transmitted to the service provider;
perform (304) an authentication process for the user;
determine (306) whether the user is located in the trusted location of the user; and
control (308) an access to a service for the user based on a result of the authentication process and the determination whether the user is located in the trusted location of the user.

2. The computer-readable medium of claim 1, wherein a location-based parameter of the trusted location of the user is determined and stored in advance, and the program code is configured to determine whether the user is located in the trusted location of the user by:
receiving a location-based parameter of a current location of the user; and
comparing the location-based parameter of the current location of the user and the location-based parameter of the trusted location of the user.

3. The computer-readable medium of claim 2, wherein the location-based parameter of the trusted location of the user and the location-based parameter of the current location of the user are channel state information determined by a user device of the user based on radio frequency signal reflection in the trusted location of the user and the current location of the user, respectively.

4. The computer-readable medium as in any one of claims 1-3, wherein the program code is configured to:
receive an input from the user regarding a current location of the user; and
determine whether the user is located in the trusted location of the user based on the input from the user.

5. The computer-readable medium as in any one of claims 1-4, wherein the trusted location of the user is a home or an office of the user.

6. A computer-readable medium comprising a program code that, when the program code is executed on a processor, a computer, or a programmable hardware component, causes the processor, the computer, or the programmable hardware component to:
generate (402) a user profile of a user, the user profile including a trusted location of the user,
wherein the trusted location is a location verifiable by a service provider based on information or parameters securely transmitted to the service provider;
initiate (404) an authentication process for the user;
provide (406) information associated with a current location of the user to a server; and
receive (408) a service from the server based on a result of the authentication process and
determination whether the user is located in the trusted location of the user.

7. The computer-readable medium of claim 6, wherein the program code is configured to:
determine a location-based parameter of the trusted location of the user and send the location-based parameter of the trusted location of the user to the server; and
determine a location-based parameter of a current location of the user and send the location-based parameter of the current location of the user, as the information associated with the current location of the user, to the server.

8. The computer-readable medium of claim 7, wherein the location-based parameter of the trusted location of the user and the location-based parameter of the current location of the user are channel state information determined by a user device of the user based on radio frequency signal reflection in the trusted location of the user and the current location of the user, respectively.

9. The computer-readable medium as in any one of claims 6-8, wherein the information associated with the current location of the user is an input of the current location of the user.

10. The computer-readable medium as in any one of claims 6-9, wherein the program code is configured to unlock a user device of the user if it is determined that the user is located in the trusted location of the user.

11. The computer-readable medium as in any one of claims 6-10, wherein the program code is configured to enable unlocking a user device of the user using facial recognition or voice recognition only if it is determined that the user is located in the trusted location of the user.

12. An apparatus for authentication of a user, comprising a processor (210) and a storage (220), wherein the processor (210) is configured to:
generate a user profile of a user, the user profile including a trusted location of the user, wherein the trusted location is a location verifiable by a service provider based on information or parameters securely transmitted to the service provider;
perform an authentication process for the user;
determine whether the user is located in the trusted location of the user; and
control an access to a service for the user based on a result of the authentication process and the determination whether the user is located in the trusted location of the user.

13. The apparatus of claim 12, wherein a location-based parameter of the trusted location of the user is determined and stored in advance, and the processor is configured to receive a location-based parameter of a current location of the user, and determine whether the user is located in the trusted location of the user by comparing the location-based parameter of the current location of the user and the location-based parameter of the trusted location of the user.

14. The apparatus of claim 13, wherein the location-based parameter of the trusted location of the user and the location-based parameter of the current location of the user are channel state information determined by a user device of the user based on radio frequency signal reflection in the trusted location of the user and the current location of the user, respectively.

15. The apparatus as in any one of claims 12-14, wherein the processor is configured to receive an input from the user regarding a current location of the user and determine whether the user is located in the trusted location of the user based on the input from the user.
